# EUROPEAN PATENT APPLICATION

(11) **EP 2 450 987 A1**
(43) Date of publication of application: **09.05.2012**
(21) Application number: 10793839.1
(22) Date of filing: 29.06.2010
(51) Int. Cl.: H01M 4/136, H01M 4/58, H01M 4/1397, H01M 4/62

(54) **POSITIVE ELECTRODE FOR NONAQUEOUS ELECTROLYTE SECONDARY BATTERY, METHOD FOR PRODUCING SAME, AND NONAQUEOUS ELECTROLYTE SECONDARY BATTERY**

(30) Priority: 30.06.2009 JP 2009154946
(71) Applicant: Panasonic Corporation, Kadoma-shi Osaka 571-8501 (JP)
(72) Inventor: NAKURA, Kensuke, 1-61 Shiromi 2-chome, Chuo-ku, Osaka-shi, Osaka 540-6207 (JP)
(74) Representative: TBK
(86) International application number: PCT/JP2010/004289
(87) International publication number: WO 2011/001666

(57) **Abstract**

A non-aqueous electrolyte secondary battery 1 includes a flat electrode assembly 10 produced by winding a positive electrode, a negative electrode, and a separator interposed therebetween and forming them into a flat shape, a battery case 11, and a non-aqueous electrolyte. The positive electrode includes a current collector and an active material layer. The positive electrode active material layer includes an olivine-type lithium phosphate with a volume mean particle size of 2 nm to 300 nm, a fluorocarbon resin with a cross-linkable functional group, and a conductive agent. The fluorine atom concentration of the positive electrode active material layer decreases from the outer surface of the positive electrode active material layer toward the interface between the positive electrode active material layer and the positive electrode current collector. The fluorocarbon resin with the cross-linkable functional group is in an area from the interface up to 10 µm toward the outer surface.

## Description

### [Technical Field]

The invention relates to a positive electrode for a non-aqueous electrolyte secondary battery a method for producing the same, and a non-aqueous electrolyte secondary battery More particularly, the invention relates to an improvement in a positive electrode for a non-aqueous electrolyte secondary battery using a lithium phosphate with an olivine structure as a positive electrode active material.

### [Background Art]

Non-aqueous electrolyte secondary batteries, which have high capacity and high energy density and can be easily made compact and light-weight, are widely used as the power source for electronic devices. Also, the use of non-aqueous electrolyte secondary batteries as the power source for transport devices such as electric vehicles is extensively examined, and some are being put to practical use. Representative non-aqueous electrolyte secondary batteries have a positive electrode including lithium cobaltate, a negative electrode including graphite, and a polyolefin porous film (separator).

Lithium cobaltate has been conventionally used as a positive electrode active material. However, since cobalt is a rare metal, stable supply of lithium cobaltate is difficult and the cost is high. Also, since cobalt is highly reactive, lithium cobaltate may further promote heat generation inside the battery due to overcharge or a short circuit.

As an alternative positive electrode active material to lithium cobaltate, lithium phosphates with an olivine structure are receiving attention. Olivine-type lithium phosphates can be stably supplied relatively easily at low costs, since many of other metals than lithium used as raw materials are abundant on the Earth. Also, olivine-type lithium phosphates are less likely to promote heat generation inside the battery than lithium cobaltate, since the metals contained therein have a lower reactivity than cobalt. Therefore, non-aqueous electrolyte secondary batteries including olivine-type lithium phosphates are believed to have higher safety than non-aqueous electrolyte secondary batteries including lithium cobaltate. Representative examples of olivine-type lithium phosphates include lithium iron phosphate.

Non-aqueous electrolyte secondary batteries including olivine-type lithium phosphates have a problem in that the battery performance such as cycle characteristics and output characteristics tends to deteriorate due to an increase in charge/discharge cycles. Also, when such non-aqueous electrolyte secondary batteries are mass produced, the battery performance tends to vary

PTL 1 discloses a positive electrode including lithium iron phosphate and polyvinylidene fluoride with a mass mean molecular weight of 37,000 to 1,000,000. PTL 2 discloses a positive electrode including an olivine-type lithium phosphate and a vinylidene fluoride-tetrafluoroethylene-hexafluoropropylene copolymer. PTL 3 discloses a positive electrode including lithium iron phosphate with a mean particle size of 500 nm or less.

However, the use of the positive electrodes disclosed in PTLs 1 to 3 cannot sufficiently prevent significant deterioration of battery performance due to an increase in charge/discharge cycles and variation of battery performance in mass production.

PTL 4 relates to a method of applying a positive electrode mixture slurry containing a positive electrode active material and a fluorocarbon resin onto a current collector and drying the resultant coating film. In this method, the drying temperature is selected according to the fluorine concentration of the surface of the coating film being dried, thereby adjusting the fluorine concentration of the surface of the dried coating film to 1.0 to 1.5 times the fluorine concentration of the positive electrode mixture slurry PTL5 discloses the use of a lithium manganate containing fluorine atoms as a positive electrode active material wherein the fluorine atom concentration decreases from the particle surface toward the inside.

Both PTLs 4 and 5 use positive electrode active materials which are not olivine-type lithium phosphates.

### [Citation List]

### [Patent Literatures]

[PTL 1] Japanese Laid-Open Patent Publication No. 2005-302300
[PTL2] Japanese Laid-Open Patent Publication No. 2006-032144
[PTL 3] Japanese Laid-Open Patent Publication No. 2009-029670
[PTL4] Japanese Laid-Open Patent Publication No. 2003-249212
[PTL] Japanese Laid-Open Patent Publication No. 2000-149925

### [Summary of Invention]

### [Technical Problem]

A conventional positive electrode active material layer containing an olivine-type lithium phosphate and a fluorocarbon resin has poor adhesion to a positive electrode current collector. In particular, in the process of rolling the dried positive electrode active material layer, the positive electrode active material layer may separate from the positive electrode current collector. This is believed to result in variation in battery performance in mass production. Further, the area having separated in the rolling process increases as the number of charge/discharge cycles increases. This is believed to result in deterioration of the current collecting performance of the positive electrode current collector and significant deterioration of battery performance. In particular, it was found that when an olivine-type lithium phosphate with a nano-order particle size was used as in PTL 3, the adhesion of the positive electrode active material layer to the positive electrode current collector further deteriorated.

To address this problem, the present inventors examined the combined use of an olivine-type lithium phosphate with a nano-order particle size (hereinafter may be referred to as a "nano-order olivine-type lithium phosphate") and a fluorocarbon resin with a cross-linkable functional group (hereinafter may be referred to as a "cross-linkable-group containing fluorocarbon resin"). However, they found that even when a positive electrode including such a positive electrode active material layer was used, the adhesion of the positive electrode active material layer to the positive electrode current collector deteriorated due to charge/discharge at high temperatures.

The present inventors studied the cause of the problem of the positive electrode active material layer including a nano-order olivine-type lithium phosphate and a cross-linkable-group containing fluorocarbon resin. As a result, they found that the fluorine atom concentration of the area of the positive electrode active material layer from the interface between the positive electrode current collector and the positive electrode active material layer up to 10 µm toward the outer surface of the positive electrode active material layer was 0.2 mass% or less. From this, they found that the positive electrode active material layer contained almost no cross-linkable-group containing fluorocarbon resin near the interface with the positive electrode current collector. Based on the finding, the present inventors thought as follows.

Fine inorganic particles such as nano-order olivine-type lithium phosphates have poor adhesion to other inorganic particles and current collectors. However, since the operations of applying a positive electrode mixture slurry onto a positive electrode current collector surface, drying the resultant coating film, and rolling it are performed, the positive electrode active material layer appears to adhere closely to the positive electrode current collector at room temperatures. However, at high temperatures, the adhesion of the positive electrode active material layer to the positive electrode current collector cannot be retained, since there is almost no cross-linkable-group containing fluorocarbon resin near the interface between the positive electrode active material layer and the positive electrode current collector, and the positive electrode active material layer becomes softened. As a result, the positive electrode active material layer easily separates from the positive electrode current collector, and the battery performance deteriorates significantly.

An object of the invention is to provide a positive electrode for a non-aqueous electrolyte secondary battery including an olivine-type lithium phosphate with a nano-order particle size, a method for producing such a positive electrode, and a non-aqueous electrolyte secondary battery including such a positive electrode and having good battery performance even after an increased number of charge/discharge cycles.

### [Solution to Problem]

The present inventors conducted further studies based on the above findings. As a result, they have arrived at the idea of controlling the method of preparing a positive electrode mixture slurry used to form a positive electrode active material layer including a nano-order olivine-type lithium phosphate and a cross-linkable-group containing fluorocarbon resin. They have found that in the case of using a positive electrode mixture slurry prepared by mixing a predetermined amount of a nano-order olivine-type lithium phosphate into an organic solvent containing a cross-linkable-group containing fluorocarbon resin in a plurality of times, the resultant positive electrode active material layer contains a sufficient amount of the cross-linkable-group containing fluorocarbon resin for retaining the adhesion between the positive electrode active material layer and a positive electrode current collector, in the area from the interface between the positive electrode active material layer and the positive electrode current collector up to 10 µm toward the outer surface, although the fluorine atom concentration decreases from the outer surface of the positive electrode active material layer toward the interface therebetween. Based on this finding, they have completed the invention.

The positive electrode for a non-aqueous electrolyte secondary battery according to the invention includes: a positive electrode current collector; and a positive electrode active material layer supported on a surface of the positive electrode current collector, the positive electrode active material layer including an olivine-type lithium phosphate as a positive electrode active material, a binder, and a conductive agent. The olivine-type lithium phosphate is fine particles with a volume mean particle size of 2 nm to 300 nm. The binder comprises a fluorocarbon resin with a cross-linkable functional group. The fluorine atom concentration of the positive electrode active material layer decreases from an outer surface of the positive electrode active material layer toward the interface between the positive electrode active material layer and the positive electrode current collector. The fluorocarbon resin with the cross-linkable functional group is present in the area of the positive electrode active material layer from the interface up to 10 µm toward the outer surface.

The method for producing a positive electrode for a non-aqueous electrolyte secondary battery according to the invention is directed to a method for producing a positive electrode for a non-aqueous electrolyte secondary battery which includes an olivine-type lithium phosphate as a positive electrode active material. This method includes the steps of: preparing a positive electrode mixture slurry by mixing a predetermined amount of an olivine-type lithium phosphate with a volume mean particle size of 2 nm to 300 nm, in a plurality of times, into an organic solvent in which a fluorocarbon resin with a cross-linkable functional group is dissolved or dispersed, and mixing a conductive agent thereinto; and forming a positive electrode active material layer by applying the positive electrode mixture slurry onto a surface of a positive electrode current collector to form a coating film, drying the coating film, and rolling the coating film.

The non-aqueous electrolyte secondary battery according to the invention includes: a positive electrode capable of absorbing and desorbing lithium ions; a negative electrode capable of absorbing and desorbing lithium ions; a separator interposed between the positive electrode and the negative electrode; and a lithium-ion conductive non-aqueous electrolyte, wherein the positive electrode is the above-mentioned positive electrode for a non-aqueous electrolyte secondary battery.

### [Advantageous Effects of Invention]

The non-aqueous electrolyte secondary battery of the invention has good battery performance such as cycle characteristics, and the battery performance hardly deteriorates due to an increase in charge/discharge cycles and charge/discharge at high temperatures. Further, even when the non-aqueous electrolyte secondary battery of the invention is mass produced, there is little variation in battery performance.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

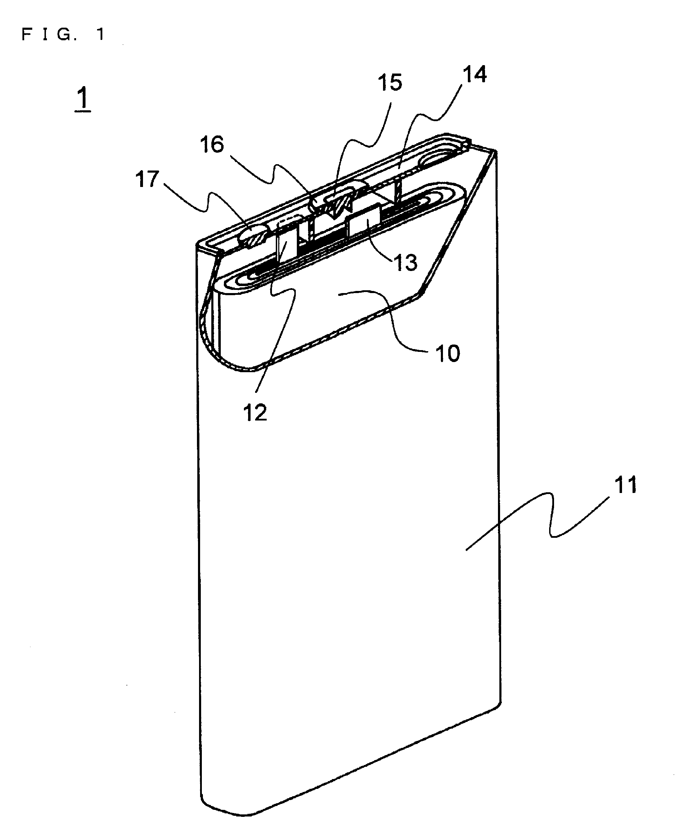

FIG 1 is a schematic perspective view of the structure of a non-aqueous electrolyte secondary battery in a first embodiment of the invention.

### [Description of Embodiments]

The non-aqueous electrolyte secondary battery according to the invention includes a positive electrode including a positive electrode active material layer and a positive electrode current collector, a negative electrode including a negative electrode active material layer and a negative electrode current collector, a separator interposed between the positive electrode and the negative electrode, and a lithium ion conductive non-aqueous electrolyte, and is characterized by the positive electrode. The non-aqueous electrolyte secondary battery according to the invention can have the same structure as conventional non-aqueous electrolyte secondary batteries except for the positive electrode.

In the positive electrode of the invention, the positive electrode active material layer has the following characteristics (1) and (2).
(1) The positive electrode active material layer contains an olivine-type lithium phosphate with a volume mean particle size of 2 nm to 300 nm and a cross-linkable-group containing fluorocarbon resin. The use of an olivine-type lithium phosphate as a positive electrode active material enhances the safety of the resultant non-aqueous electrolyte secondary battery

(2) The fluorine atom concentration of the positive electrode active material layer decreases from the outer surface of the positive electrode active material layer toward the interface between the positive electrode active material layer and the positive electrode current collector (hereinafter may be referred to as simply "the interface" unless otherwise specified) in the thickness direction of the positive electrode active material layer, and the cross-linkable-group containing fluorocarbon resin is present in the area of the positive electrode active material layer from the interface up to 10 µm toward the outer surface. The fluorine atom concentration is in a substantial agreement with the content of the cross-linkable-group containing fluorocarbon resin. The outer surface of the positive electrode active material layer faces the negative electrode active material layer with the separator therebetween.

In the positive electrode active material layer of the positive electrode of the invention, the fluorine atom concentration decreases from the outer surface toward the interface. However, since the cross-linkable-group containing fluorocarbon resin is present in the area from the interface up to 10 µm toward the outer surface, the fluorine atom concentration near the interface is not "0". That is, the cross-linkable-group containing fluorocarbon resin is present not only on the outer surface of the positive electrode active material layer but also near the interface.

As such, the adhesion of the positive electrode active material layer to the positive electrode current collector is significantly improved despite the inclusion of the nano-order olivine-type lithium phosphate. As a result, deterioration of battery performance due to an increase in charge/discharge cycles and charge/discharge at high temperatures is suppressed. Also, variation of battery performance in mass production is suppressed, and non-aqueous electrolyte secondary batteries having almost the same battery performance can be efficiently produced.

In order to form the positive electrode active material layer of the present invention, it is necessary to control the method of preparing a positive electrode mixture slurry According to conventional techniques, a positive electrode mixture slurry is prepared by adding and mixing a mixture of a positive electrode active material and a conductive agent into an organic solvent containing a binder at a time. When a positive electrode mixture slurry is prepared by a conventional technique by using a nano-order olivine-type lithium phosphate as a positive electrode active material and a cross-linkable-group containing fluorocarbon resin as a binder, the resultant positive electrode active material layer contains the cross-linkable-group containing fluorocarbon resin only on the outer surface and does not contain it near the interface.

On the other hand, according to the invention, a positive electrode mixture slurry is prepared by mixing a nano-order olivine-type lithium phosphate into an organic solvent containing a cross-linkable-group containing fluorocarbon resin in a plurality of times. The use of this positive electrode mixture slurry enables formation of a positive electrode active material layer which contains the cross-linkable-group containing fluorocarbon resin not only on the outer surface but also near the interface, although the fluorine atom concentration decreases from the outer surface toward the interface.

The reason why the use of such a positive electrode mixture slurry enables formation of a positive electrode active material layer having the above-mentioned characteristics is not yet clear at present, but it is probably because the dispersion of the nano-order olivine-type lithium phosphate in the positive electrode mixture slurry is improved and the cross-linkable functional group of the cross-linkable-group containing fluorocarbon resin and the nano-order olivine-type lithium phosphate attract each other.

The cross-linkable-group containing fluorocarbon resin tends to gather toward the outer surface of the coating film of the slurry due to convection of the solvent contained in the positive electrode mixture slurry. The tendency of the cross-linkable-group containing fluorocarbon resin to gather toward the outer surface of the coating film of the slurry is stronger than the mutual attraction of the nano-order olivine-type lithium phosphate and the cross-linkable functional group of the cross-linkable-group containing fluorocarbon resin. However, since the nano-order olivine-type lithium phosphate is evenly dispersed in the slurry part of the cross-linkable-group containing fluorocarbon resin attracts a large number of the adjacent nano-order olivine-type lithium phosphate particles. As a result, the movement of the cross-linkable-group containing fluorocarbon resin toward the outer surface of the coating film of the slurry is suppressed. Probably for this reason, a positive electrode active material layer with the above-mentioned characteristics is formed.

The characteristics of the invention are hereinafter described in more detail.
FIG 1 is a schematic perspective view of the structure of a non-aqueous electrolyte secondary battery 1 according to a first embodiment of the invention. In FIG 1, the non-aqueous electrolyte secondary battery 1 is partially cut out to show the structure of the main part thereof.

The non-aqueous electrolyte secondary battery 1 includes: a flat electrode assembly 10 produced by winding a positive electrode, a negative electrode, and a separator interposed between the positive and negative electrodes and forming them into a flat shape; a prismatic battery case 11 having an opening at one end in the longitudinal direction and containing the flat electrode assembly 10, a non-aqueous electrolyte (not shown), and the like; a seal plate 14 sealing the prismatic battery case 11 and serving as a positive electrode terminal; a negative electrode terminal 15 supported on the seal plate 14; a positive electrode lead 12 connecting a positive electrode current collector and the seal plate 14; a negative electrode lead 13 connecting a negative electrode current collector and the negative electrode terminal 15; a gasket 16 insulating the seal plate 14 from the negative electrode terminal 15; and a seal stopper 17 closing the injection hole of the seal plate 14 after the non-aqueous electrolyte is injected into the prismatic battery case 11.

The flat electrode assembly 10 can be produced by winding a positive electrode, a negative electrode, and a separator interposed therebetween and forming the resultant wound electrode assembly into a flat shape by a process such as pressing. Each of the positive electrode, the negative electrode, and the separator is shaped like a strip. The flat electrode assembly 10 can also be produced by winding a strip-like laminate of a positive electrode, a negative electrode, and a separator interposed therebetween around a rectangular plate.

The positive electrode includes a positive electrode current collector and a positive electrode active material layer.
The positive electrode current collector is shaped like a strip. The positive electrode current collector can be, for example, a metal foil or a porous metal sheet made of a metal material such as stainless steel, aluminum, an aluminum alloy, or titanium. The porous metal sheet can be a woven fabric, a non-woven fabric, a perforated sheet, or the like. The thickness of the positive electrode current collector is preferably 1 to 500 µm, and more preferably 5 to 20 µm.

The positive electrode active material layer is formed on both faces of the positive electrode current collector in the thickness direction in this embodiment, but there is no limitation thereto. It may be formed on only one face thereof.
The positive electrode active material layer includes a nano-order olivine-type lithium phosphate (positive electrode active material), a cross-linkable-group containing fluorocarbon resin (binder), and a conductive agent. The fluorine atom concentration of the positive electrode active material layer decreases from the outer surface toward the interface, and the cross-linkable-group containing fluorocarbon resin is present in the area from the interface up to 10 µm toward the outer surface. The fluorine atom concentration of the positive electrode active material layer can be determined by elemental mapping of a section of the positive electrode active material layer in the thickness direction using an X-ray micro analyzer (XMA).

The fluorine atom concentration of the positive electrode active material layer preferably decreases continuously or stepwise from the outer surface of the positive electrode active material layer toward the interface in the thickness direction of the positive electrode active material layer. As used herein, a continuous decrease refers to a decrease of the fluorine atom concentration with a constant gradient. In the case of a stepwise decrease, a positive electrode active material layer is composed of a plurality of thin layers having different fluorine atom concentrations in the thickness direction, and the fluorine atom concentrations of the thin layers decrease toward the interface. A continuous decrease or a stepwise decrease may be hereinafter referred to as a "regular decrease".

Due to the regular decrease of the fluorine atom concentration, the dispersion of the cross-linkable-group containing fluorocarbon resin in the coating film of the positive electrode mixture slurry is further improved, and the adhesion between the positive electrode active material layer and the positive electrode current collector is further increased. Also, at a high output, the voltage tends to become locally uneven in the positive electrode active material layer, but there is an advantage in that such voltage unevenness is prevented.

A method for continuously decreasing the fluorine atom concentration of the positive electrode active material layer is, for example, to increase the drying temperature with a predetermined gradient when the coating film of the positive electrode mixture slurry applied to the surface of the positive electrode current collector is dried. Also, a method for decreasing the fluorine atom concentration of the positive electrode active material layer stepwise is, for example, to increase the drying temperature every given period of time when the coating film of the positive electrode mixture slurry applied to the surface of the positive electrode current collector is dried.

Also, the fluorine atom concentration of the area of the positive electrode active material layer from the outer surface of the positive electrode active material layer up to 10 µm (this area is hereinafter referred to as the "surface layer") in the thickness direction of the positive electrode active material layer is preferably 3 mass% to 9 mass% of the whole amount of the surface layer. That is, the content of the cross-linkable-group containing fluorocarbon resin in the surface layer is preferably such that the fluorine atom concentration is 3 mass% to 9 mass%. If the fluorine atom concentration of the surface layer is too low, the ability of the surface layer to hold the positive electrode active material becomes weak, so the positive electrode active material may separate from the positive electrode active material layer, thereby resulting in a decrease in battery capacity and battery performance. If the fluorine atom concentration of the surface layer is too high, the fluorine atom concentration on the interface side decreases relatively. This means that the amount of the cross-linkable-group containing fluorocarbon resin decreases on the interface side. As a result, the adhesion between the positive electrode active material layer and the positive electrode current collector may lower.

Also, the fluorine atom concentration of the area of the positive electrode active material layer from the interface up to 10 µm (this area is hereinafter referred to as the "interface layer") in the thickness direction of the positive electrode active material layer is preferably 0.5 mass% to 3 mass% of the whole amount of the interface layer. That is, the content of the cross-linkable-group containing fluorocarbon resin in the interface layer is preferably such that the fluorine atom concentration is 0.5 mass% to 3 mass%. If the fluorine atom concentration of the interface layer is too low, the amount of the cross-linkable-group containing fluorocarbon resin in the interface layer decreases, so the adhesion between the positive electrode active material layer and the positive electrode current collector may lower. If the fluorine atom concentration of the interface layer is too high, the amount of the cross-linkable-group containing fluorocarbon resin in the surface layer may decrease relatively. As a result, the binding ability of the surface layer decreases, so the positive electrode active material may separate from the positive electrode active material layer, thereby resulting in a decrease in battery capacity and battery performance.

The nano-order olivine-type lithium phosphate used as the positive electrode active material has a volume mean particle size of 2 nm to 300 nm, and preferably 10 nm to 200 nm. If the volume mean particle size is less than 2 nm or more than 300 nm, the dispersion of the nano-order olivine-type lithium phosphate in the positive electrode mixture slurry may become poor, so the resultant positive electrode active material layer may tend to contain the cross-linkable-group containing fluorocarbon resin only on the outer surface.

The volume mean particle size is measured as follows. A test sample is prepared by adding 20 mg of a sample and 1 ml of sodium alkyl ether sulfate to 50 ml of a dispersion medium (trade name: ISOTON-II, available from Beckman Coulter, Inc.) and dispersing them with a ultrasonic dispersing device (trade name: UH-50, available from STM Corporation) at a ultrasonic frequency of 20 kHz for 3 minutes. The test sample is measured with a particle size distribution analyzer (trade name: Multisizer 2, available from Beckman Coulter, Inc.). Therein, the aperture diameter is set to 100 µm, and the number of particles measured is set to 50,000 counts. The volume mean particle size is calculated from the volume particle size distribution of the sample particles.

Examples of nano-order olivine-type lithium phosphates include: olivine-type lithium phosphates which are represented by the formula: LiXPO₄ (where X is at least one selected from the group consisting of Cr, Cu, Ni, Mn, Fe, Zn, and Al) and have a volume mean particle size of 2 nm to 300 nm; and olivine-type lithium phosphates which are represented by the formula: Li₂XPO₄F (where X is as defined above) and have a volume mean particle size of 2 nm to 300 nm. Among the elements represented by X in the above respective formulae, Ni, Mn, and Fe are preferable, and Fe is particularly preferable.

Lithium iron phosphate with Fe as X is particularly superior in terms of, for example, stable supply and safety. Lithium iron phosphate may also be referred to as iron lithium phosphate or LFP The iron contained in lithium iron phosphate may be partially replaced with one or more different metals A. The different metals A are metals other than iron and lithium, and examples include Mn, Cr, Cu, Ni, Zn, and Al. While the amount of the different metal(s) A substituted is not particularly limited, the amount of the different metal(s) A is preferably 1 mol% to 50 mol% of the total amount of iron and the different metal(s) A.

Such nano-order olivine-type lithium phosphates can be used singly or in combination. Also, nans-border olivine-type lithium phosphates may be used in combination with other known positive electrode active materials unless the preferable characteristics of the invention are impaired.

Examples of fluorocarbon resins for the cross-linkable-group containing fluorocarbon resin used as the binder include polytetrafluoroethylene, an ethylene-tetrafluoroethylene copolymer, a tetrafluoroethylene-hexafluoropropylene copolymer, a tetrafluoroethylene-vinylidene fluoride copolymer, a hexafluoropropylene-vinylidene fluoride copolymer, and polyvinylidene fluoride.

Among them, in consideration of the continuance of the adhesion between the positive electrode current collector and the positive electrode active material layer, for example, a tetrafluoroethylene-vinylidene fluoride copolymer, a hexafluoropropylene-vinylidene fluoride copolymer, and polyvinylidene fluoride are preferable, and polyvinylidene fluoride is particularly preferable. While the molecular weight of the fluorocarbon resin is not particularly limited, the preferable mass mean molecular weight is 200,000 to 1,500,000.

The cross-linkable functional group used for the cross-linkable-group containing fluorocarbon resin can be a cross-linkable functional group which can be substituted for hydrogen or fluorine atoms contained in the fluorocarbon resin, and examples include a carboxyl group, a hydroxyl group, a carbonyl group, an acid anhydride group, an amino group, a cyano group, and a silanol group. Among them, in consideration of stability in a high voltage range, for example, a carboxyl group, a hydroxyl group, and a silanol group are preferable, and a carboxyl group is particularly preferable. One or more of such cross-linkable functional groups are substituted in the cross-linkable-group containing fluorocarbon resin.

While the amount of the cross-linkable functional group substituted in the fluorocarbon resin (amount of substitution) is not particularly limited, it is preferably 0.1 mmol to 100 mmol per 1 g of the fluorocarbon resin, and more preferably 0.5 mmol to 10 mmol per 1 g of the fluorocarbon resin. If the amount of the cross-linkable functional group is too small, the adhesion between the positive electrode current collector and the positive electrode active material layer may become insufficient. If the amount of the cross-linkable functional group is excessive, a large number of cross-links are formed in the positive electrode active material layer, so the lithium ion conductivity of the positive electrode active material layer may lower.

The cross-linkable-group containing fluorocarbon resin can be synthesized by, for example, copolymerizing a fluorocarbon resin monomer with a cross-linkable functional group and a fluorocarbon resin monomer without a cross-linkable functional group. Examples of fluorocarbon resin monomers include tetrafluoroethylene, hexafluoropropylene, and vinylidene fluoride. Also, commercially available cross-linkable-group containing fluorocarbon resins can be used in the invention, and an example is KF polymer 9210 (trade name, available from Kureha Corporation).

Such cross-linkable-group containing fluorocarbon resins can be used singly or in combination. Further, a cross-linkable-group containing fluorocarbon resin and a conventional binder for active material layers can be used in combination unless the preferable characteristics of the invention are impaired.

Examples of conductive agents are carbon materials including graphites such as natural graphite and artificial graphite, and carbon blacks such as acetylene black, ketjen black, channel black, furnace black, lamp black, and thermal black. These conductive agents can be used singly or in combination.

The positive electrode of the invention can be produced by a production method including, for example, a step of preparing a positive electrode mixture slurry and a step of forming a positive electrode active material layer to obtain a positive electrode. In the step of preparing a positive electrode mixture slurry, specifically, a nano-order olivine-type lithium phosphate is mixed into an organic solvent in which a cross-linkable-group containing fluorocarbon resin is dissolved or dispersed (hereinafter referred to as a "fluorocarbon resin liquid ") in two or more times, and a conductive agent is further mixed to prepare a positive electrode mixture slurry. The timing of mixing the conductive agent is not particularly limited, and the conductive agent may be mixed before or after the nano-order olivine-type lithium phosphate is mixed, or between the plurality of times it is mixed (e.g., between the first mixing and the second mixing). The conductive agent can also be mixed in two or more times.

The number of times the nano-order olivine-type lithium phosphate is mixed is preferably two to five times, and more preferably three to five times. If it is mixed at a time, a positive electrode active material layer with the desired characteristics cannot be formed. Also, if the number of times exceeds five times, a positive electrode active material layer with the desired characteristics can be formed, but mixing requires a long time, which is industrially disadvantageous.
When the nano-order olivine-type lithium phosphate and the conductive agent are mixed into the fluorocarbon resin liquid, the temperature of the fluorocarbon resin liquid is preferably about 20 °C to 60 °C.

When the nano-order olivine-type lithium phosphate is mixed in a plurality of times, the amount mixed at each one of the plurality of times is not particularly limited. The total mixing amount may be divided evenly. Alternatively, a large amount may be mixed at the first time, and the amount mixed at the second time onward may be gradually decreased. For example, taking an example of mixing in three times, 30 mass% to 50 mass% of the total mixing amount can be mixed at the first time. At the second time, the mixing amount can be decreased from the first time, and the mixing amount can be selected from the range of 20 mass% to 40 mass% of the total mixing amount. At the third time, the mixing amount can be decreased from the second time, and the mixing amount can be selected from the range of 5 mass% to 25 mass% of the total mixing amount.

The organic solvent in which the cross-linkable-group containing fluorocarbon resin is to be dissolved or dispersed can be, for example, N-methyl-2-pyrrolidone, tetrahydrofuran, or dimethylformamide.

The positive electrode mixture slurry prepared in this step contains a nano-order olivine-type lithium phosphate, a cross-linkable-group containing fluorocarbon resin, and a conductive agent as solid contents. The total amount of these solid contents in the positive electrode mixture slurry is designated as the total solid content. The content of the nano-order olivine-type lithium phosphate in the positive electrode mixture slurry is preferably 80 mass% to 97 mass% of the total solid content. The content of the cross-linkable-group containing fluorocarbon resin is preferably 2 mass% to 10 mass% of the total solid content. The content of the conductive agent is the remainder, which is obtained by subtracting the content of the nano-order olivine-type lithium phosphate and the content of the cross-linkable-group containing fluorocarbon resin from the total solid content.

It is preferable to select the solid content composition of the positive electrode mixture slurry from the above-mentioned range and add the nano-order olivine-type lithium phosphate in a plurality of times. This ensures formation of a positive electrode active material layer in which the fluorine atom concentration tends to decrease as described above and a sufficient amount of the cross-linkable-group containing fluorocarbon resin for retaining the adhesion between the positive electrode active material layer and the positive electrode current collector is present near the interface.

In the next step, using the positive electrode mixture slurry prepared in the above-described step, a positive electrode active material layer is formed on a surface of a positive electrode current collector to produce a positive electrode of the invention. Specifically, the positive electrode mixture slurry is applied onto one or both surfaces of a positive electrode current collector in the thickness direction, and the resultant coating film of the positive electrode mixture slurry is dried and rolled.

The positive electrode mixture slurry can be applied onto the positive electrode current collector by a known application method such as dip coating, roller coating, or gravure coating. The coating film of the positive electrode mixture slurry applied to the positive electrode current collector surface is preferably dried at a temperature of 60°C to 110°C in 1 to 10 minutes. If the drying temperature is too low, the resultant positive electrode active material layer may contain the cross-linkable-group containing fluorocarbon resin only on the outer surface. Also, drying requires a long time, which is industrially disadvantageous. If the drying temperature is too high, the nano-order olivine-type lithium phosphate and the like may deteriorate. Also, the drying time may exceed 10 minutes, but it is desirably within 10 minutes in consideration of the production efficiency, the deterioration of the nano-order olivine-type lithium phosphate, etc.

When a predetermined temperature increase gradient or a stepwise temperature increase is set in the above-mentioned ranges for the drying temperature and the drying time, a positive electrode active material layer in which the fluorine atom concentration changes continuously or stepwise can be formed.

The negative electrode includes a negative electrode current collector and a negative electrode active material layer.
The negative electrode current collector is also shaped like a strip in the same manner as the positive electrode current collector. The negative electrode current collector can be a metal foil or a porous metal sheet made of a meal material such as stainless steel, nickel, copper, or a copper alloy. The porous metal sheet can be a woven fabric, a non-woven fabric, a perforated sheet, or the like. While the thickness of the negative electrode current collector is not particularly limited, it is preferably 1 to 500 µm, and more preferably 5 to 20 µm.

The negative electrode active material layer is formed on both faces of the negative electrode current collector in the thickness direction in this embodiment, but there is no limitation thereto. It may be formed on only one face thereof. The negative electrode active material layer includes a negative electrode active material, and if necessary includes a binder, a conductive agent, a thickener, etc.

The negative electrode active material can be, for example, a carbon material, an alloyable active material, or a lithium alloy. Examples of carbon materials include natural graphites, artificial graphites, coke, partially graphitized carbon, carbon fibers, spherical carbon, and amorphous carbon. Alloyable active materials refer to substances which are alloyed with lithium to absorb lithium ions and which absorb and release lithium ions reversibly at the potential of the negative electrode. Examples of alloyable active materials include silicon-based active materials and tin-based active materials. Examples of silicon-based active materials include silicon, silicon oxides, silicon nitrides, silicon alloys, and silicon compounds. Examples of tin-based active materials include tin, tin oxides, tin alloys, and tin compounds. These negative electrode active materials can be used singly or in combination.

The binder can be a resin material, a rubber material, or the like. Examples of resin materials include polyethylene, polypropylene, polyvinyl acetate, polymethyl methacrylate, nitrocellulose, and fluorocarbon resins. Among them, fluorocarbon resins are preferable. Examples of fluorocarbon resins include polytetrafluoroethylene, polyvinylidene fluoride, a tetrafluoroethylene-hexafluoropropylene copolymer, and a vinylidene fluoride-hexafluoropropylene copolymer. These are fluorocarbon resins having no cross-linkable functional group. Examples of rubber materials include styrene-butadiene rubber particles and acrylonitrile rubber particles. These binders can be used singly or in combination. Examples of thickeners include carboxymethyl cellulose.

The negative electrode active material layer can be formed by, for example, applying a negative electrode mixture slurry onto a surface of a negative electrode current collector, drying the resultant coating film, and rolling it. The negative electrode mixture slurry can be prepared by, for example, mixing a negative electrode active material, optional components such as a binder, a conductive agent, and a thickener, and a solvent. Examples of solvents which may be used include organic solvents such as N-methyl-2-pyrrolidone, tetrahydrofuran, and dimethylformamide, and water. Also, a negative electrode active material layer comprising an alloyable active material can also be formed by, for example, a vapor deposition method such as vacuum deposition. While the thickness of the negative electrode active material layer is not particularly limited, it is preferably 10 µm to 200 µm.

The separator is interposed between the positive electrode and the negative electrode so as to insulate the positive electrode from the negative electrode while allowing lithium ions to pass through. The separator can be a porous sheet with pores, a non-woven fabric made of resin fibers, a woven fabric, or the like. The porous sheet and the resin fibers are made of a resin material. Examples of resin materials include polyolefins such as polyethylene and polypropylene, polyamides, and polyamide-imides. Among them, the porous sheet is preferable. The pore size of the porous sheet is preferably 0.05 µm to 0.15 µm. The thickness of the porous sheet is preferably 5 µm to 40 µm.

The flat electrode assembly 10 is impregnated with a non-aqueous electrolyte. The non-aqueous electrolyte of this embodiment includes a lithium salt and a non-aqueous solvent, and may further contain additives.
Examples of lithium salts include LiClO₄, LiBF₄, LiPF₆, LiAlCl₄, LiSbF₆, LiSCN, LiCF₃SO₃, LiCF₃CO₂, LiAsF₆, LiB₁₀Cl_{10,} lithium lower aliphatic carboxylates, LiCl, LiBr, Lil, chloroborane lithium, borates, and imide salts. While the concentration of the lithium salt is not particularly limited, it is preferably 0.5 mol to 2 mol per 1 liter of the non-aqueous solvent.

Examples of non-aqueous solvents include cyclic carbonic acid esters such as propylene carbonate and ethylene carbonate, chain carbonic acid esters such as diethyl carbonate, ethyl methyl carbonate, and dimethyl carbonate, and cyclic carboxylic acid esters such as γ-butyrolactone and y-valerolactone. These non-aqueous solvents can be used singly or in combination.

Examples of additives which may be used include vinylene carbonate compounds (hereinafter referred to as "VC compounds") and benzene compounds. Examples of VC compound include vinylene carbonate, vinyl ethylene carbonate, and divinyl ethylene carbonate. Examples of benzene compounds include cyclohexyl benzene, biphenyl, and diphenyl ether.

In this embodiment, the non-aqueous electrolyte secondary battery 1 having a prismatic shape has been described. However, the non-aqueous electrolyte secondary battery of the invention is not limited to prismatic batteries. The non-aqueous electrolyte secondary battery of the invention is applicable to various types of batteries, such as cylindrical batteries including wound electrode assemblies, laminate-packed batteries including wound, flat, or layered electrode assemblies, and coin batteries including layered electrode assemblies.

### [Examples]

The invention is hereinafter described specifically by way of Examples and Comparative Examples.

### [Example 1]

### (1) Preparation of positive electrode

A fluorocarbon resin liquid was prepared by dissolving 10 parts by mass of polyvinylidene fluoride with a carboxyl group (trade name: KF polymer 9210, available from Kureha Corporation; hereinafter referred to as "COOH-PVDF") in 100 parts by mass of N-methyl-2-pyrrolidone.

Using a double arm kneader, 100 parts by mass of lithium iron phosphate (LiFePO₄, positive electrode active material, volume mean particle size 100 nm) was added and mixed into the fluorocarbon resin liquid in four times. At this time, the amount of the lithium iron phosphate added at the first time was set to 30 parts by mass, the amount added at the second time was set to 30 parts by mass, the amount added at the third time was set to 20 parts by mass, and the amount added at the fourth time was set to 20 parts by mass. Every time it was added, it was fully mixed. Thereafter, 2 parts by mass of acetylene black (conductive agent) was added and mixed. A positive electrode mixture slurry was prepared in this manner.

This positive electrode mixture slurry was applied onto both faces of a 15-µm thick, strip-like aluminum foil (positive electrode current collector, 35 mm x 400 mm). The coating films of the positive electrode mixture slurry on both faces of the strip-like aluminum foil were dried at 80°C for 10 minutes to form positive electrode active material layers. The positive electrode active material layers were then rolled to produce a positive electrode. The total thickness of the positive electrode active material layers on both faces and the positive electrode current collector was 150 µm. Thereafter, the positive electrode was cut to predetermined dimensions to obtain a strip-like positive electrode plate.
The cut section of the positive electrode was observed with a scanning electron microscope. As a result, there was no sign of separation of each positive electrode active material layer between the aluminum foil and the positive electrode active material layer.

The section of each positive electrode active material layer obtained in the above manner was subjected to a line analysis by an X-ray microanalyzer (hereinafter referred to as an "XMA", trade name: EPMA-1610, available from Shimadzu Corporation), to determine the fluorine atom concentration. As a result, it was confirmed that the fluorine atoms were present over the whole section of the positive electrode active material layer, that the fluorine atom concentration decreased from the outer surface of the positive electrode active material layer toward the interface, and that the fluorine atoms were present in the interface layer from the interface up to 10 µm. This clearly indicates that in Example 1, COOH-PVDF is present not only on the outer surface of the positive electrode active material layer but also in the interface layer.

Also, the fluorine atom concentration of the interface layer was 1 mass%, and the fluorine atom concentration of the surface layer from the outer surface of the positive electrode active material layer up to 10 µm was 7 mass%. These fluorine atom concentrations were determined based on the calibration curve obtained by using a plurality of standard samples with different concentrations.

### (2) Preparation of negative electrode

Flake artificial graphite was ground and classified to adjust the volume mean particle size to 20 µm, to prepare a negative electrode active material. A negative electrode mixture slurry was prepared by mixing 100 parts by mass of the negative electrode active material, 1 part by mass of styrene butadiene rubber (binder), and 100 parts by mass of a 1-mass% aqueous solution of carboxymethyl cellulose with a double arm kneader. The negative electrode mixture slurry was applied onto both faces of a 10-µm thick copper foil (negative electrode current collector), dried, and rolled to prepare a negative electrode. The total thickness of the negative electrode active material layers on both faces and the negative electrode current collector was 155 µm. Thereafter, the negative electrode was cut to predetermined dimensions to obtain a strip-like negative electrode plate.

### (3) Preparation of non-aqueous electrolyte

A mixed solution was prepared by adding 1 part by mass of vinylene carbonate to 99 parts by mass of a solvent mixture of ethylene carbonate and ethyl methyl carbonate in a volume ratio of 1:3. Thereafter, LiPF₆ was dissolved in the mixed solution at a concentration of 1.0 mol/L, to prepare a non-aqueous electrolyte.

### (4) Fabrication of battery

Using the positive electrode plate, the negative electrode plate, and the non-aqueous electrolyte prepared in the above manner, a non-aqueous electrolyte secondary battery was produced as follows.
One end of an aluminum positive electrode lead was connected to the positive electrode current collector. One end of a nickel negative electrode lead was connected to the negative electrode current collector. A16-µm thick polyethylene porous sheet (separator, trade name: Hipore, available from Asahi Kasei Corporation) was interposed between the positive electrode plate and the negative electrode plate, and they were wound. The resultant wound electrode assembly was pressed in an environment of 25°C, to prepare a flat electrode assembly (hereinafter referred to as simply an "electrode assembly"). The pressing pressure was set to 0.5 MPa.

The electrode assembly was inserted into a prismatic battery case made of iron. A polypropylene frame was fitted to the upper part of the electrode assembly. The frame separates the electrode assembly from a stainless steel seal plate and prevents the positive electrode lead or negative electrode lead from coming into contact with the prismatic battery case. The other end of the positive electrode lead was connected to the lower face of the seal plate. The other end of the negative electrode lead was connected to a negative electrode terminal. The negative electrode terminal was attached to the seal plate with a resin gasket therebetween. The seal plate was fitted to the opening of the prismatic battery case and welded thereto. A predetermined amount of the non-aqueous electrolyte was injected into the prismatic battery case from the injection hole of the seal plate. Thereafter, the injection hole was closed with a seal stopper, to produce a non-aqueous electrolyte secondary battery

### [Example 2]

A non-aqueous electrolyte secondary battery was produced in the same manner as in Example 1 except for the use of lithium iron phosphate with a volume mean particle size of 3 nm. The section of each positive electrode active material layer obtained was analyzed in the same manner as in Example 1. As a result, it was confirmed that the fluorine atoms were present over the whole section of the positive electrode active material layer, that the fluorine atoms were present in the interface layer, and that the fluorine atom concentration decreased from the outer surface of the positive electrode active material layer toward the interface. Also, the fluorine atom concentration of the interface layer was 0.5 mass%, and the fluorine atom concentration of the surface layer was 9 mass%.

### [Example 3]

A non-aqueous electrolyte secondary battery was produced in the same manner as in Example 1 except for the use of lithium iron phosphate with a volume mean particle size of 300 nm. The section of each positive electrode active material layer obtained was analyzed in the same manner as in Example 1. As a result, it was confirmed that the fluorine atoms were present over the whole section of the positive electrode active material layer, that the fluorine atoms were present in the interface layer, and that the fluorine atom concentration decreased from the outer surface of the positive electrode active material layer toward the interface. Also, the fluorine atom concentration of the interface layer was 3 mass%, and the fluorine atom concentration of the surface layer was 5 mass%.

### [Example 4]

A non-aqueous electrolyte secondary battery was produced in the same manner as in Example 1, except that the coating film of the positive electrode mixture slurry on the surface of the strip-like aluminum foil was dried for 20 minutes by increasing the temperature at a gradient of 5°C/min from a drying start temperature of 60°C. The section of each positive electrode active material layer obtained was analyzed in the same manner as in Example 1. As a result, it was confirmed that the fluorine atoms were present over the whole section of the positive electrode active material layer, that the fluorine atoms were present in the interface layer, and that the fluorine atom concentration decreased continuously from the outer surface of the positive electrode active material layer toward the interface. Also, the fluorine atom concentration of the interface layer was 3 mass%, and the fluorine atom concentration of the surface layer was 6 mass%.

### [Example 5]

A non-aqueous electrolyte secondary battery was produced in the same manner as in Example 1, except that the coating film of the positive electrode mixture slurry on the surface of the strip-like aluminum foil was dried for 20 minutes by increasing the drying temperature by 2°C every 2 minutes from a drying start temperature of 60°C. The section of each positive electrode active material layer obtained was analyzed in the same manner as in Example 1. As a result, it was confirmed that the fluorine atoms were present over the whole section of the positive electrode active material layer, that the fluorine atoms were present in the interface layer, and that the fluorine atom concentration decreased stepwise from the outer surface of the positive electrode active material layer toward the interface. Also, the fluorine atom concentration of the interface layer was 2 mass%, and the fluorine atom concentration of the surface layer was 6 mass%.

### [Example 6]

A non-aqueous electrolyte secondary battery was produced in the same manner as in Example 1 except for the use of polyvinylidene fluoride having a carboxyl group content of 1 mmol/g. The section of each positive electrode active material layer obtained was analyzed in the same manner as in Example 1. As a result, it was confirmed that the fluorine atoms were present over the whole section of the positive electrode active material layer, that the fluorine atoms were present in the interface layer, and that the fluorine atom concentration decreased from the outer surface of the positive electrode active material layer toward the interface. Also, the fluorine atom concentration of the interface layer was 0.6 mass%, and the fluorine atom concentration of the surface layer was 8.5 mass%.

### [Example 7]

A non-aqueous electrolyte secondary battery was produced in the same manner as in Example 1 except for the use of polyvinylidene fluoride having a carboxyl group content of 90 mmol/g. The section of each positive electrode active material layer obtained was analyzed in the same manner as in Example 1. As a result, it was confirmed that the fluorine atoms were present over the whole section of the positive electrode active material layer, that the fluorine atoms were present in the interface layer, and that the fluorine atom concentration decreased from the outer surface of the positive electrode active material layer toward the interface. Also, the fluorine atom concentration of the interface layer was 3 mass%, and the fluorine atom concentration of the surface layer was 5 mass%.

### [Example 8]

A non-aqueous electrolyte secondary battery was produced in the same manner as in Example 1 except for the use of polyvinylidene fluoride having a carboxyl group content of 120 mmol/g. The section of each positive electrode active material layer obtained was analyzed in the same manner as in Example 1. As a result, it was confirmed that the fluorine atoms were present over the whole section of the positive electrode active material layer, that the fluorine atoms were present in the interface layer, and that the fluorine atom concentration decreased from the outer surface of the positive electrode active material layer toward the interface. Also, the fluorine atom concentration of the interface layer was 0.5 mass%, and the fluorine atom concentration of the surface layer was 9 mass%.

### [Comparative Example 1]

A non-aqueous electrolyte secondary battery was produced in the same manner as in Example 1, except that a positive electrode mixture slurry was prepared by mixing lithium iron phosphate (LiFePO₄, positive electrode active material, volume mean particle size 100 nm) and acetylene black, and adding and mixing this mixture into the fluorocarbon resin liquid at a time.
The cut section of the positive electrode was observed with a scanning electron microscope. As a result, there was no sign of separation of each positive electrode active material layer between the aluminum foil and the positive electrode active material layer.

The section of each positive electrode active material layer obtained was analyzed in the same manner as in Example 1. As a result, it was confirmed that the fluorine atom concentration was very high on the outer surface of the positive electrode active material layer and that almost no fluorine atoms were present at the interface. This clearly indicates that the positive electrode active material layer of Comparative Example 1 contains COOH-PVDF only on the surface of the positive electrode active material layer and contains almost no COOH-PVDF at the interface.

### [Comparative Example 2]

A non-aqueous electrolyte secondary battery was produced in the same manner as in Example 1 except for the use of polyvinylidene fluoride having no carboxyl group instead of COOH-PVDF.
The cut section of the positive electrode was observed with a scanning electron microscope. As a result, there were signs of separation of each positive electrode active material layer between the aluminum foil and the positive electrode active material layer.

### [Comparative Example 3]

A non-aqueous electrolyte secondary battery was produced in the same manner as in Example 1 except for the use of lithium iron phosphate with a volume mean particle size of 0.5 nm. The section of each positive electrode active material layer obtained was analyzed in the same manner as in Example 1. As a result, it was confirmed that the fluorine atom concentration was very high on the outer surface of the positive electrode active material layer, and that almost no fluorine atoms were present at the interface. The fluorine atom concentration of the interface layer was 0.2 mass%.

### [Comparative Example 4]

A non-aqueous electrolyte secondary battery was produced in the same manner as in Example 1 except for the use of lithium iron phosphate with a volume mean particle size of 350 nm. The section of each positive electrode active material layer obtained was analyzed in the same manner as in Example 1. As a result, it was confirmed that the fluorine atom concentration was very high on the outer surface of the positive electrode active material layer, and that almost no fluorine atoms were present at the interface. The fluorine atom concentration of the interface layer was 0.3 mass%.

The non-aqueous electrolyte secondary batteries produced in Examples 1 to 8 and Comparative Examples 1 to 4 were evaluated as follows. Table 1 shows the results.

### [Evaluation of battery capacity]

The respective batteries were charged and discharged three times under the following conditions, and the discharge capacity at the third cycle obtained was used as battery capacity Table 1 shows the results.
Constant current charge: current 200 mA, cut-off voltage 4.2 V.
Constant voltage charge: voltage 4.2 V, cut-off current 20 mA, stand-by time 20 minutes.
Constant current discharge: current 200 mA, cut-off voltage 2.5 V, stand-by time 20 minutes.

### [Evaluation of cycle life]

The respective batteries were repeatedly charged and discharged at 20°C under the following conditions to determine their cycle life. The cycle life refers to the number of cycles at which the discharge capacity of the battery has decreased to half the discharge capacity at the first cycle. Table 1 shows the results.
Constant current charge: current 500 mA, cut-off voltage 4.2 V.
Constant voltage charge: voltage 4.2 V, cut-off current 100 mA.
Constant current discharge: current 500 mA, cut-off voltage 3 V.

### [Evaluation of cycle life at high temperature]

An evaluation was made in the same manner as in the above-mentioned cycle life evaluation, except that the temperature during the evaluation was changed from 20°C to 45°C, in order to determine high temperature cycle life. The high temperature cycle life refers to the number of cycles at which the discharge capacity of the battery has decreased to half the discharge capacity at the first cycle. Table 1 shows the results.

**[Table 1]**

| | Battery capacity (mAh) | Cycle life (number of cycles) | High temperature cycle life (number of cycles) |
|---|---|---|---|
| Example 1 | 2,008 | 1,000 | 800 |
| Example 2 | 2,007 | 1,010 | 780 |
| Example 3 | 2,006 | 1,000 | 770 |
| Example 4 | 2,008 | 1,010 | 810 |
| Example 5 | 2,007 | 1,005 | 800 |
| Example 6 | 2,009 | 1,000 | 820 |
| Example 7 | 2,010 | 1,010 | 810 |
| Example 8 | 2,005 | 900 | 520 |
| Comparative Example 1 | 2,010 | 800 | 300 |
| Comparative Example 2 | 2,000 | 750 | 200 |
| Comparative Example 3 | 2,005 | 700 | 250 |
| Comparative Example 4 | 2,002 | 700 | 220 |

Table 1 clearly indicates that the batteries of Examples 1 to 8 have a small discharge capacity loss even when the charge/discharge is repeated at room temperature (20°C) and high temperature (45°C), thus being capable of maintaining high battery performance over a long period of time. This is probably because the positive electrode current collector and the positive electrode active material layer had good adhesion, and the adhesion was retained even at the high temperature.

The battery of Example 8 exhibited a lower value of high temperature cycle life than the batteries of Examples 1 to 7. This is probably because the use of COOH-PVDF having a relatively high carboxyl-group content of 120 mmol/g increased the cross-links in the positive electrode active material layer, thereby lowering the lithium ion conductivity of the positive electrode active material layer.

The battery of Comparative Example 1 was almost equivalent to the battery of Example 1 in the cycle life evaluation, but was significantly inferior to the battery of Example 1 in the high temperature cycle life evaluation. This is probably because the repetition of the charge/discharge cycles at the high temperature facilitated the separation of the positive electrode active material layer from the positive electrode current collector.

The battery of Comparative Example 2 was significantly inferior to the battery of Example 1 in both cycle life evaluation and high temperature cycle life evaluation. This is probably due to the combined use of the nano-order lithium iron phosphate and PVDF having no carboxyl group. As a result, the adhesion between the positive electrode active material and the positive electrode current collector became insufficient, and the positive electrode active material layer partially separated from the positive electrode current collector during the formation of the positive electrode active material layer.

In the case of the batteries of Comparative Examples 3 and 4, the volume mean particle size of the nano-order lithium iron phosphate was too small or too large. Probably for this reason, the dispersion of the nano-order lithium iron phosphate in the positive electrode mixture slurry became poor, and the resultant positive electrode active material layer contained COOH-PVDF only on the outer surface. As a result, the high temperature cycle life significantly decreased.

### [Industrial Applicability]

The non-aqueous electrolyte secondary battery of the invention can be used in the same applications as those of conventional non-aqueous electrolyte secondary batteries, and is particularly useful as the main power source or auxiliary power source for electronic devices, electrical appliances, machine tools, transport devices, power storage devices, etc. Examples of electronic devices include personal computers, cellular phones, mobile devices, personal digital assistants, and portable game machines. Examples of electric appliances include vacuum cleaners and video cameras. Examples of machine tools include power tools and robots. Examples of transport devices include electric vehicles, hybrid electric vehicles, plug-in hybrid electric vehicles, and fuel cell cars. Examples of power storage devices include un interruptible power supplies.

## Claims

1. A positive electrode for a non-aqueous electrolyte secondary battery comprising:
a positive electrode current collector; and
a positive electrode active material layer supported on a surface of the positive electrode current collector, the positive electrode active material layer including an olivine-type lithium phosphate as a positive electrode active material, a binder, and a conductive agent,
wherein the olivine-type lithium phosphate is fine particles with a volume mean particle size of 2 nm to 300 nm,
the binder comprises a fluorocarbon resin with a cross-linkable functional group,
the fluorine atom concentration of the positive electrode active material layer decreases from an outer surface of the positive electrode active material layer toward the interface between the positive electrode active material layer and the positive electrode current collector, and
the fluorocarbon resin with the cross-linkable functional group is present in an area of the positive electrode active material layer from the interface up to 10 µm toward the outer surface.

2. The positive electrode for a non-aqueous electrolyte secondary battery in accordance with claim 1, wherein the fluorine atom concentration of the positive electrode active material layer decreases continuously or stepwise from the outer surface of the positive electrode active material layer toward the interface between the positive electrode current collector and the positive electrode active material layer.

3. The positive electrode for a non-aqueous electrolyte secondary battery in accordance with claim 1, wherein the fluorine atom concentration of an area of the positive electrode active material layer from the outer surface of the positive electrode active material layer up to 10 µm toward the interface between the positive electrode current collector and the positive electrode active material layer is 3 mass% to 9 mass%.

4. The positive electrode for a non-aqueous electrolyte secondary battery in accordance with claim 1, wherein the fluorine atom concentration of the area of the positive electrode active material layer from the interface between the positive electrode current collector and the positive electrode active material layer up to 10 µm toward the outer surface of the positive electrode active material layer is 0.5 mass% to 3 mass%.

5. The positive electrode for a non-aqueous electrolyte secondary battery in accordance with claim 1, wherein the olivine-type lithium phosphate is lithium iron phosphate.

6. The positive electrode for a non-aqueous electrolyte secondary battery in accordance with claim 1, wherein the content of the cross-linkable functional group is 0.1 mmol to 100 mmol per 1 g of the fluorocarbon resin with the cross-linkable functional group.

7. The positive electrode for a non-aqueous electrolyte secondary battery in accordance with claim 1, wherein in the fluorocarbon resin with the cross-linkable functional group, the cross-linkable functional group is a carboxyl group, and the fluorocarbon resin is at least one fluorocarbon resin selected from the group consisting of polytetrafluoroethylene, an ethylene-tetrafluoroethylene copolymer, a tetrafluoroethylene-hexafluoropropylene copolymer, a tetrafluoroethylene-vinylidene fluoride copolymer, a hexafluoropropylene-vinylidene fluoride copolymer, and polyvinylidene fluoride.

8. A method for producing a positive electrode for a non-aqueous electrolyte secondary battery which includes an olivine-type lithium phosphate as a positive electrode active material, the method comprising the steps of:
preparing a positive electrode mixture slurry by mixing a predetermined amount of an olivine-type lithium phosphate with a volume mean particle size of 2 nm to 300 nm, in a plurality of times, into an organic solvent in which a fluorocarbon resin with a cross-linkable functional group is dissolved or dispersed, and mixing a conductive agent thereinto; and
forming a positive electrode active material layer by applying the positive electrode mixture slurry onto a surface of a positive electrode current collector to form a coating film, drying the coating film, and rolling the coating film.

9. The method for producing a positive electrode for a non-aqueous electrolyte secondary battery in accordance with claim 8, wherein in the step of preparing the positive electrode mixture slurry, the predetermined amount of the olivine-type lithium phosphate is mixed into the organic solvent in two to five times.

10. The method for producing a positive electrode for a non-aqueous electrolyte secondary battery in accordance with claim 8,
wherein the content of the olivine-type lithium phosphate in the positive electrode mixture slurry is 80 mass% to 97 mass% of the total amount of the olivine-type lithium phosphate, the fluorocarbon resin, and the conductive agent,
the content of the fluorocarbon resin is 2 mass% to 10 mass% of the total amount, and
the remainder is the conductive agent.

11. The method for producing a positive electrode for a non-aqueous electrolyte secondary battery in accordance with claim 8, wherein in the step of forming the positive electrode active material layer, the coating film is dried at a temperature of 60 to 110°C for 1 to 10 minutes.

12. A non-aqueous electrolyte secondary battery comprising:
a positive electrode capable of absorbing and desorbing lithium ions;
a negative electrode capable of absorbing and desorbing lithium ions;
a separator interposed between the positive electrode and the negative electrode; and
a lithium-ion conductive non-aqueous electrolyte,
wherein the positive electrode is the positive electrode of claim 1 for a non-aqueous electrolyte secondary battery.
